# EUROPÄISCHE PATENTSCHRIFT

(11) **EP 0 985 843 B1**
(45) Veröffentlichungstag und Bekanntmachung des Hinweises auf die Patenterteilung: **02.03.2005**
(21) Anmeldenummer: 99114501.2
(22) Anmeldetag: 23.07.1999
(51) Int. Cl.: F16D 65/12

(54) **Zweiteilige Bremsscheibe**
Two-part brake disc
Disque de frein en deux parties

(30) Priorität: 11.09.1998 DE 19841607
(43) Veröffentlichungstag der Anmeldung: 15.03.2000
(73) Patentinhaber: Dr.Ing. h.c.F. Porsche Aktiengesellschaft, 70435 Stuttgart (DE)
(72) Erfinder: Martin, Roland, 71287 Weissach (DE)

(56) Entgegenhaltungen:
- EP-A- 0 096 553
- EP-A- 0 235 382
- DE-A- 1 775 685
- DE-A- 19 606 737
- DE-U- 8 408 125
- DE-U- 29 622 361
- US-A- 3 542 166

## Beschreibung

Die Erfindung bezieht sich auf eine zweiteilige Bremsscheibe, insbesondere eine innenbelüftete Bremsscheibe nach dem Oberbegriff des Anspruchs 1.

Aus der EP 0 096 553 A1 ist bereits eine Bremsscheibe bekannt geworden, bei der ein polygonaler Außenrand einer Nabe in einer korrespondierenden polygonalen Öffnung eines Reibringes angeordnet ist. Verbindungselemente sind an den Ecken des Polygons angeordnet.

Aus dem DE-Gbm 296 22 361 U1 ist ferner eine Bremsscheibe bekannt geworden, bei der ein Bremsring auf einer Nabe formschlüssig angeordnet ist. Zur axialen Sicherung sind im Bereich einer zwischen Bremsring und nabe gebildeten Fuge Verbindungselemente vorgesehen, die für eine axiale Fixierung des Bremsrings auf der Nabe sorgen.

Aufgabe der Erfindung ist es, eine zweiteilige Bremsscheibe zu schaffen, die Schwingungsanregungen vermeidet und Wärmespannungen reduziert.

Diese Aufgabe wird erfindungsgemäß durch die Merkmale des Anspruchs 1 gelöst. Weitere vorteilhafte Merkmale beinhalten die Unteransprüche.

Nach der Erfindung erfolgt durch eine formschlüssige Anordnung des Reibringes auf einem Außenrand des Bremsscheibentopfes mittels korrespondierender polygonaler Ausbildungen der Aufnahmeöffnung des Reibringes und des Außenrandes des Bremsscheibentopfes sowie eine Klemmenverbindung beider Bauteile über entsprechende Verbindungselemente eine ebenfalls formschlüssige Übertragung der Bremsmomente.

Die erzielten Vorteile bestehen insbesondere darin, daß eine hohe Schwingungstilgung durch die axial angeordneten Verbindungselemente erfolgt, wobei zusätzliche zwischenliegende reibschlüssige Auflagen am Schraubenkopf bzw. an der Scheibe bzw. an der Schraubenmutter der Verbindungselemente vorgesehen sein können.

Die Bremsscheibe ist über die korrespondierenden Aufnahmen am Bremsscheibentopf um dem Reibring sowie durch die Verbindungselemente auf die Schwingungsform des Systems abstimmbar, insbesondere durch Änderung bzw. Anpassung der Übertragungs-Geometrie und der Verbindung.

Desweiteren können die Wärmespannungen reduziert werden, insbesondere durch die freie thermische Ausdehnungsmöglichkeit des Reibringes, wodurch auch eine Rißständigkeit erzielt wird.

Die polygonale Ausbildung der Aufnahmeöffnung und des Außenrandes kann sich je nach den Erfordernissen vom Dreieck bis zu einen X-Eck erstrecken. Dargestellt ist beispielsweise ein Sechseck.

Die Verbindung des Reibringes mit dem Bremsscheibentopf erfolgt mittels Schrauben, Bolzen, Hülsen, Nieten oder dergleichen, die in Bohrungen auf der Verbindungslinie zwischen den Eckpunkten des Polygonals angeordnet sind. Es können je nach den Erfordernissen auf der Verbindungslinie auch mehrere Verbindungselemente vorgesehen sein. Möglich sind auch Verbindungselemente in den Eckpunkten.

Die Verbindungselemente, wie beispielsweise Schrauben, können in Hülsen angeordnet sein. Ebenso sind nach der Erfindung Nieten in Hülsen oder ohne Hülsen möglich. Abgesetzte Schrauben mit einem herausstehenden Gewindeteil sind ebenfalls verwendbar. Die Schrauben, Nieten oder dergleichen können mit einer großflächigen Scheibe zu beiden Seiten versehen sein, damit eine optimale Klemmung und Verbindung des Reibringes mit dem Bremsscheibentopf bewirkt wird.

Zwischen dem Schraubenkopf, den Scheiben, den Nietköpfen und den Auflageflächen am Reibring und/oder am Bremsscheibentopf ist eine reibschlüssige Abstützung bzw. Auflage vorgesehen.

Die polygonale Aufnahme kann am Außenrand entsprechend den Erfordernissen mit Spiel oder paßgenau ausgebildet sein.

Denkbar ist auch eine Absetzung der Aufnahme und des Außenrandes, wobei sich die abgesetzten Flächen gegenüberstehen. Die Verbindungselemente sind dann etwa mittig der Absetzung angeordnet. Ausführungsbeispiele der Erfindung sind in den Zeichnungen dargestellt und werden im folgenden näher beschrieben.

Der Bremsscheibentopf und die Reibringe können aus einem Carbon-Werkstoff bestehen und durch die mechanische Verbindung über die Verbindungselemente entfällt ein sogenanntes "Zusammenbacken" der beiden Bauteile.

Es zeigen
- Fig. 1: eine Draufsicht auf einen mit einem Reibring verbundenen Bremsscheibentopf mittels einer polygonalen Aufnahme und Verbindungselementen,
- Fig. 2 bis 6: Schnittdarstellungen nach den Linien II bis VI durch verschiedene Verbindungselemente und
- Fig. 7: eine Ausführung einer Aufnahme und eines Außenrandes mit einer Absetzung, gemäß Schnitt nach der Linie VII-VII.

Die zweiteilige Bremsscheibe 1 besteht im wesentlichen aus einem Reibring 2 und einem Bremsscheibentopf 3, die miteinander über Verbindungselemente V, wie Schrauben, Niete, Hülsen und dergleichen verbunden sind.

Zum Verbinden des Bremsscheibentopfes 3 mit dem Reibring 2 weist dieser eine zentrische polygonale Aufnahmeöffnung 4 auf, in die ein entsprechend polygonal gestalteter Außenrand 5 des Bremsscheibentopfes 3 angeordnet ist.

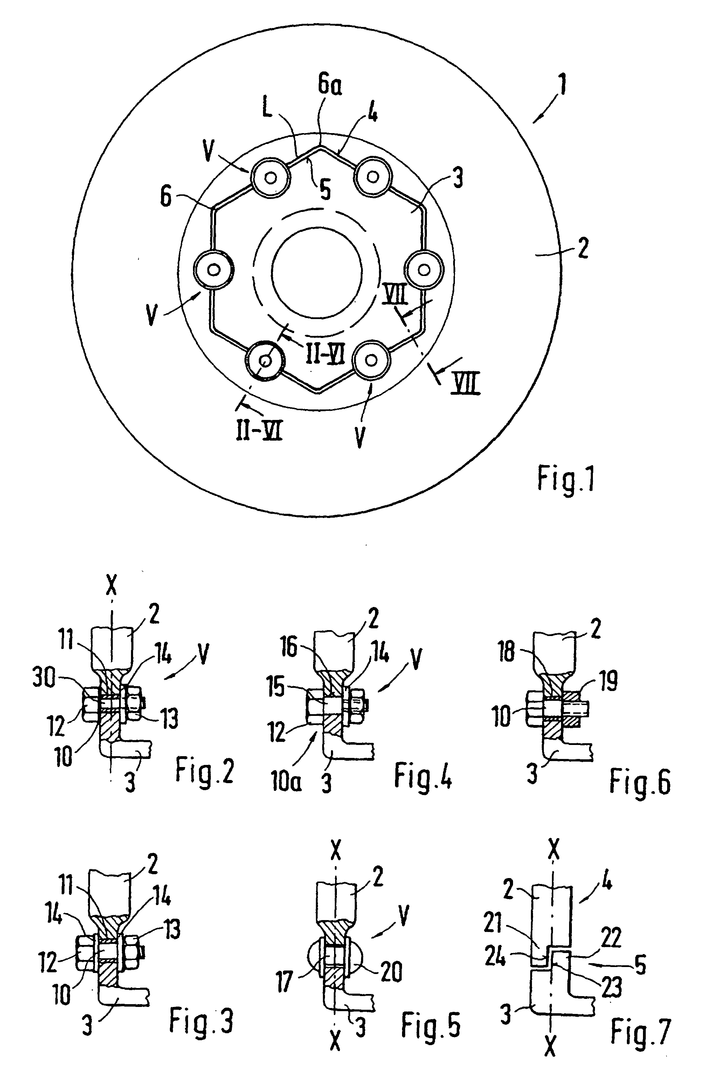

Wie in Figur 1 näher gezeigt, ist die Aufnahmeöffnung 4 und der Außenrand beispielsweise sechseckförmig ausgeführt und der Reibring 2 und der Außenrand 5 liegen in einer Ebene X-X zur Verbindung über die Verbindungselemente V. Diese Elemente V sind jeweils auf der Verbindungslinie L zwischen zwei Eckpunkten 6 und 6a angeordnet, wobei auch mehrere Verbindungselemente V auf dieser Linie L angeordnet sein können. Auch in den jeweiligen Eckpunkten können Verbindungselemente V alleine oder mit den anderen Verbindungselementen V auf der Linie L vorgesehen sein.

Gemäß Figur 2 ist als Verbindungselement V eine Schraube 10 in einer Hülse 11 vorgesehen. Der Schraubenkopf 12 und die gegenüberstehende Mutter 13 mit Scheibe 14 spannen den Reibring 2 mit dem Bremsscheibentopf 3 zusammen.

Gemäß Figur 3 ist die Schraube 10 in der Hülse 11 angeordnet und weist am Schraubenkopf 12 und an der Schraubenmutter 13 jeweils eine Scheibe 14 auf. Zwischen diesen Scheiben 14 sind dann die Bauelemente 2 und 3 festgespannt.

Gemäß Figur 4 ist die Schraube 15 mit einem zum Gewindeteil abgesetzten Schaft versehen, welche in der Bohrung 16 angeordnet ist und an den sich die Scheibe 14 bzw. die Schraubenmutter 13 anlegt.

Gemäß Figur 5 erfolgt die Verbindung vom Reibring 2 mit dem Bremsscheibentopf 3 über ein Niet 17. Zwischen den Nietköpfen und den Anlageflächen können Scheiben vorgesehen sein.

Gemäß Figur 6 ist die Schraube 10 in einer Hülse 18 mit einer dem Schraubenkopf 12 gegenüberstehenden Bund 19 gehalten. Zwischen dem Bund 19 und dem Schraubenkopf 12 sind die Bauteile 2 und 3 eingespannt gehalten.

Zwischen mindestens einer Anlagefläche vom Schraubenkopf 12 einer Scheibe 14, einem Bund 19, einem Nietkopf 20 mit dem Reibring 2 oder dem Bremsscheibentopf 3 ist eine reibschlüssige Auflage 30 vorgesehen.

Die Aufnahmeöffnung 4 und der Außenrand 5 können nach einer weiteren Ausführung auch jeweils eine Absetzung 21, 22 aufweisen, deren Flächen 23, 24 derart aufeinanderliegen, daß der Bremsscheibentopf 3 mit dem Reibring 2 in einer Ebene X-X angeordnet sind. Die Verbindung dieser Teile kann wahlweise mit den Verbindungselementen 4 gemäß der Figuren 2 bis 6 erfolgen.

## Patentansprüche

1. Zweiteilige Bremsscheibe, insbesondere innenbelüftete Bremsscheibe, mit
- einem Bremsscheibentopf (3) mit einem polygonal ausgeführten Außenrand (5),
- einem Reibring (2), der eine zum Außenrand (5) koaxial korrespondierende, polygonal ausgeführte Aufnahmeöffnung (4) aufweist,
- wobei zwischen der Aufnahmeöffnung und dem Außenrand ein Spiel und in der Aufnahmeöffnung Eckpunkte (6,6a) gebildet sind, und
- axial ausgerichtete Verbindungselemente (V) zur Verbindung des Bremsscheibentopfes mit dem Reibring vorgesehen sind,
**dadurch gekennzeichnet, daß** der Bremsscheibentopf (3) im Bereich mindestens jeder Verbindungslinie (L) zwischen den Eckpunkten (6, 6a) der Aufnahmeöffnung (4) des Reibringes (2) über die Verbindungselemente (V) mit dem Reibring (2) verspannt ist.

2. Bremsscheibe nach Anspruch 1, **dadurch gekennzeichnet, daß** die Aufnahmeöffnung (4) sowie der Außenrand (5) jeweils eine Absetzung (21, 22) aufweisen und die Flächen der Absetzungen aufeinanderliegen.

3. Bremsscheibe nach den Ansprüchen 1 oder 2, **dadurch gekennzeichnet, daß** die Verbindungselemente (V) jeweils aus einer Schraube (10) bestehen, die in einer Hülse (11) angeordnet sind und zwischen einem Schraubenkopf (12) und einer gegenüberliegenden Scheibe (14) der Bremsscheibentopf (3) mit dem Reibring (2) verbindbar ist.

4. Bremsscheibe nach den Ansprüchen 1 oder 2, **dadurch gekennzeichnet, daß** die Verbindungselemente (V) jeweils aus einer abgesetzten Schraube (10a) bestehen, die in Bohrungen (16) des Reibringes (2) und des Bremsscheibentopfes (3) angeordnet sind und zwischen dem Schraubenkopf (12) und der gegenüberliegenden Scheibe (14) bzw. der Schraubenmutter (13) der Bremsscheibentopf (3) mit dem Reibring (2) verbindbar ist.

5. Bremsscheibe nach den Ansprüchen 1 oder 2, **dadurch gekennzeichnet, daß** die Verbindungselemente (V) jeweils aus einer Schraube (10) bestehen, die in einer Hülse (11) angeordnet ist und der Bremsscheibentopf (3) mit dem Reibring (2) über eine am Schraubenkopf (12) vorgesehene Scheibe (14) und einer an der Schraubenmutter (13) vorgesehenen weiteren Scheibe (14) verspannend verbindbar ist.

6. Bremsscheibe nach einem oder mehreren der vorhergehenden Ansprüche, **dadurch gekennzeichnet, daß** mindestens zwischen Schraubenkopf (12) bzw. Scheibe (14) und Anlagefläche am Reibring (2) bzw. am Bremsscheibentopf (3) eine reibschlüssige Auflage vorgesehen ist.

## Claims

1. A two-part brake disc, especially an internally ventilated brake disc, comprising
- a brake-disc chamber (3) with a polygonal outer edge (5),
- a friction ring (2) having a polygonal receiving opening (4) coaxially corresponding to the outer edge (5),
- wherein clearance is provided between the receiving opening and the outer edge, and comer points (6, 6a) are formed in the receiving opening, and
- axially aligned connecting elements (V) are provided for connecting the brake-disc chamber to the friction ring,
**characterised in that** the brake-disc chamber (3) is clamped to the friction ring (2) by the connecting elements (V) at least in the region of each connecting line (L) between the corner points (6, 6a) of the receiving opening (4) of the friction ring (2).

2. A brake disc according to claim 1, **characterised in that** the receiving opening (4) and the outer edge (5) each have a shoulder (21, 22), and the surfaces of the shoulders lie on top of one another.

3. A brake disc according to claim 1 or 2, **characterised in that** the connecting elements (V) each comprise a bolt (10) arranged in a sleeve (11), and the brake-disc chamber (3) is connectable to the friction ring (2) between a bolt head (12) and an opposing washer (14).

4. A brake disc according to claim 1 or 2, **characterised in that** the connecting elements (V) each comprise a shouldered bolt (10a) arranged in bores (16) of the friction ring (2) and the brake-disc chamber (3), and the brake-disc chamber (3) is connectable to the friction ring (2) between the bolt head (12) and the opposing washer (14) or nut (13).

5. A brake disc according to claim 1 or 2, **characterised in that** the connecting elements (V) each comprise a bolt (10) arranged in a sleeve (11), and the brake-disc chamber (3) can be clamped to the friction ring (2) by means of a washer (14) provided on the bolt head (12) and a further washer (14) provided on the nut (13).

6. A brake disc according to one or more of the preceding claims, **characterised in that** a frictional support is provided at least between the bolt head (12) or washer (14) and the contact surface on the friction ring (2) or the brake-disc chamber (3).

## Revendications

1. Disque de frein en deux parties, en particulier disque de frein ventilé de l'intérieur, comportant
- un pot de disque de frein (3) avec un bord extérieur (5) réalisé polygonal
- un anneau de friction (2) qui présente une ouverture de réception (4) réalisée polygonale, correspondant axialement au bord extérieur (5),
- un jeu étant formé entre l'ouverture de réception et le bord extérieur et des angles (6, 6a) étant formés dans l'ouverture de réception, et
des éléments de liaison (V) dirigés axialement étant prévus pour la liaison du pot du disque de frein et de l'anneau de friction, **caractérisé en ce que** le pot (3) du disque de frein est serré avec l'anneau de friction (2), par l'intermédiaire des éléments de liaison (V), dans la zone d'au moins chaque ligne de liaison (L) entre les angles (6, 6a) de l'ouverture de réception (4) de l'anneau de friction (2).

2. Disque de frein selon la revendication 1, **caractérisé en ce que** l'ouverture de réception (4) ainsi que le bord extérieur (5) présentent chacun un gradin (21, 22) et les surfaces des gradins reposent les unes sur les autres.

3. Disque de frein selon les revendications 1 ou 2, **caractérisé en ce que** les éléments de liaison (V) sont constitués chacun d'une vis (10) disposée dans une douille (11) et qui peut être reliée à l'anneau de friction (2), entre une tête de vis (12) et une rondelle (14) opposée du pot (3) du disque de frein.

4. Disque de frein selon les revendications 1 ou 2, **caractérisé en ce que** les éléments de liaison (V) sont constitués chacun d'une vis (10a) étagée, lesquelles vis sont disposées dans des perçages (16) de l'anneau de friction (2) et du pot (3) du disque de frein et peuvent être reliées à l'anneau de friction (2) entre la tête de vis (12) et la rondelle (14) opposée ou l'écrou (13) du pot (3) du disque de frein.

5. Disque de frein selon les revendications 1 ou 2, **caractérisé en ce que** les éléments de liaison (V) sont constitués chacun d'une vis (10) disposée dans une douille (11) et le pot (3) du disque de frein peut être relié en serrage à l'anneau de friction (2), par une rondelle (14) prévue sur la tête de vis (12) et une autre rondelle (14) prévue sur l'écrou (13).

6. Disque de frein selon une ou plusieurs des revendications précédentes, **caractérisé en ce qu'**il est prévu un support par friction au moins entre la tête de vis (12) ou la rondelle (14) et la surface de contact sur l'anneau de friction (2) ou sur le pot (3) du disque de frein.
